# EUROPEAN PATENT SPECIFICATION

(11) **EP 0 970 847 B1**
(45) Date of publication and mention of the grant of the patent: **07.02.2007**
(21) Application number: 99113181.4
(22) Date of filing: 07.07.1999
(51) Int. Cl.: B60Q 1/00

(54) **Coupling system for a headlight body, in particular for a motor vehicle headlight, complete with its cover**
Kupplunseinrichtung für Kraftfahrzeugscheinwerfer mit Deckel
Dispositif de couplage pour phare de véhicule avec couvercle

(30) Priority: 09.07.1998 IT MI981565
(43) Date of publication of application: 12.01.2000
(73) Proprietor: Automotive Lighting Italia S.p.A., 10078 Venaria Reale (Torino) (IT)
(72) Inventor: Ressia, Alessio, 10073 Cirie (IT); Muscato, Massimo, 10078 Venaria Reale (IT)
(74) Representative: Franzolin, Luigi

(56) References cited:
- EP-A- 0 451 569
- EP-A- 0 478 851
- DE-A- 3 402 274
- DE-A- 3 805 142
- DE-C- 3 531 524
- FR-A- 2 642 023
- FR-A- 2 727 190

## Description

This invention relates to a coupling system for a headlight body particularly a motor vehicle headlight, complete with relevant cover.

Vehicle headlights are known whereby a protection cover, within which are housed the various components of the headlight (for instance the bulbs, reflecting surfaces and relevant adjustment components) and closed at the front by a transparent surface (the actual headlight lens) complete at the rear with a closure cover, which protects the internal components against any external agents or influences. For the purpose of easy access to the inside of the protective head, for instance to change the bulbs, the closure cover will be usefully fitted in a removable manner to the headlight body.

After opening, in order to avoid its release from the whole of the body, it is known practice to hinge the cover on the headlight body by means of flexible polymer material straps, connected at their respective ends to the cover and to the headlight body. Although in order to effectively prevent the separation of the cover from the headlight body when it is opened for access within, this solution nevertheless does not allow the removal of the cover from the headlight body, which may otherwise prove useful or necessary in certain instances.

Furthermore, also in the assembly stage, it is useful for the cover and the headlight body to allow easy assembly. Such a coupling system according to the preamble of claim 1, is disclosed in FR-A-2642023.

It is a purpose of the present invention to provide a coupling system for a headlight body with its relevant closure cover which excludes the disadvantages as cited: in particular a purpose of the invention is to provide a coupling system whereby the cover is easily secured to the headlight body and easily removed from it, by manual or automatic operations, of a particularly simple and rapid nature (effected for instance in the manual example by one-handed dismantling), also allowing on completion of the coupling operation, ample access to the inside of the headlight body, and simultaneously allowing a simple and economical operation.

The present invention thus concerns a headlight body coupling system, in particular for a motor vehicle, with a closure cover for the said headlight body, comprising hinge-like articulation means, to allow a relative rotation of the said cover about a predetermined axis of rotation, and stop means to limit the said relative rotation to a predetermined maximum amplitude; characterised by the fact that the said hinge-like articulation means are also designed to allow reversible coupling of the said headlight body and closure cover, the said cover being separable from the said headlight body by sliding in relation to the said headlight body according to a predetermined direction of translation; the said limiting means comprising in turn at least a flexibly deforming guide carried integral with the said cover, the said guide component being coupled to the said headlight body with a predetermined interference fit according to the said direction of translation and being flexibly deformed to allow the said sliding of the said cover in relation to the said headlight body along the said translation direction.

In that way, the cover is easily secured to the headlight body and detached therefrom by extremely simple and rapid operations, which may be effected either manually (in that case also with one hand by the operator) or by automatic equipment; the presence of the flexibly deforming guide, not only assists correct relative positioning of the cover in relation to the headlight body during the assembly stage, but also avoids accidental release of the cover from the headlight body, in whatsoever relative position they may be situated: in effect, the coupling or the release of the cover from the headlight body occurs by relative sliding according to a predetermined translation direction, but such sliding is normally prevented by the guide component, which involves an interference fit with the relative sliding surface according to the translation direction; the removal of the cover from the headlight body (as also the remaining relative disassembly) is only allowed after flexible deforming of the guide component; the coupling system according to the invention also ensures an ample access to the inside of the headlight body, resulting at the same time in a simple and economic design.

Other characteristics and advantages of the present invention will appear more clearly from the following description of a non-restrictive example of operation, referring to the figures in the appended drawings, wherein:
figure 1 illustrates the coupling system for a headlight body and a relative closure cover according to the invention;
figure 2 shows a large scale illustration of a detail of the coupling system in figure 1;
figures 3 and 4 illustrate diagrammatically the operation of the coupling system according to the invention;

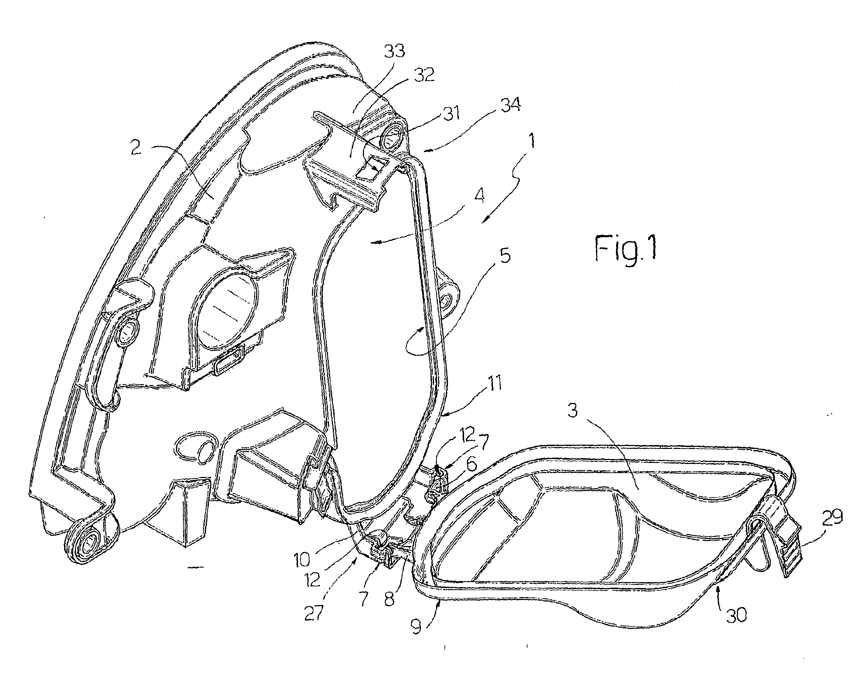

Looking at figures 1 to 4, a coupling system 1 is referred to as a whole for a headlight body 2, in particular for a motor vehicle headlight, with a closure cover 3 to the same headlight body 2: it is clear that either the headlight body 2, or the cover 3 may take whatsoever shape.

The headlight body 2 has an internal cavity 4 which, as known, houses the various components of the actual headlight (bulbs, reflectors, relative adjustment components, and so on, all known and not illustrated for the sake of simplicity): the cavity 4 has a frontal closure, as known, in the form of a glass component (not illustrated) and at the rear by the cover 3; for that purpose the cover 3 has a corresponding profile matching the rear aperture 5 of the cavity 4.

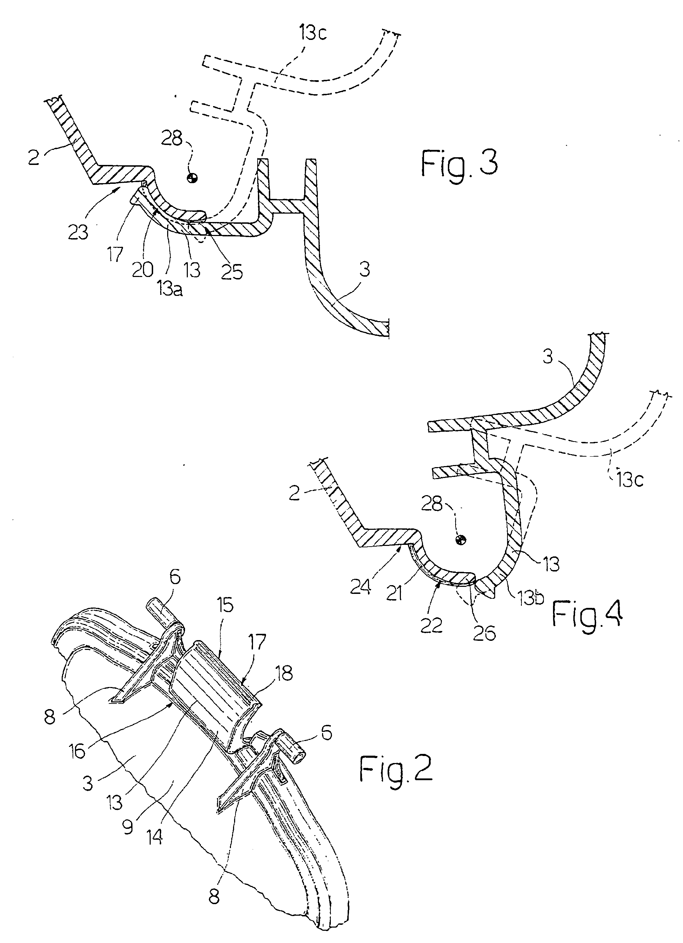

The coupling system 1 has a pair of pins 6 carried integral with the cover 3 and introduced to rotate into respective seats 7 of the headlight body 2: in particular (figure 2) the pins 6 are carried by respective support arms 8 extending to overhang an end portion 9 of the cover 3; the seats 7 however are recessed in respective extensions 10 of the headlight body 2, in turn extending in overhang from an end portion 11 of the same headlight body 2 towards the support arms 8 of the cover 3. The seats 7 have respective apertures 12 to receive the pins 6, which may be inserted into the seats 7 (and extracted from them) by sliding according to a predefined translation direction, essentially orthogonal to the said pins 6 and aligned with the said seats 7.

According to the invention, the coupling system 1 also has a flexibly deforming guide component 13 with a curved profile: the guide component 13 is one-piece linked with the end portion 9 of the cover 3 by means of the root portion 14, between the support arms 8 of the pins 6, and extends in overhang from the cover 3 in the direction of the headlight body 2; at a same free en d 15, opposite a securing end 16 on the cover 3, the guide component 13 is provided with its own end edge 17, which in turn has a groove 18.

The headlight body 2 (see figures 3, 4) has a guide 20 demarcated laterally by two sides 21, essentially flat and parallel with each other (one only of which is visible in figures 3 and 4), located between the extensions 10 and symmetrical thereto: the guide 20 has a curved slide surface 22, having a profile matching the curved profile of the guide component 13; at a first end 23 the guide 20 has shoulder 24, whereas at a second end 25, opposite the other end 23, it has an end 26 of greater rigidity than that of the guide component 13.

The pins 6 and the relative seats 7 define hinge articulation means 27 between the cover 3 and the headlight body 2, designed to allow a relative rotation of the cover 3 in relation to the headlight body 2 about a predetermined rotation axis 28, defined by the direction in which the pins 6 are extended.

The coupling system 1 also comprises an elastic strip 29, which extends overhanging in the direction of the headlight body 2 from an end portion 30 of the cover 3 essentially opposing an end portion 9: the elastic strip 29 can be snap-inserted between a relative securing seat 31 located integral on the headlight body 2, for instance recessed in a further extension 32 which extends in turn overhanging from an end portion 33 of the headlight body 2, essentially opposing the end portion 11 of the headlight; the elastic strip 29 and the relative securing seat 31 define reversing hook means 34 for the cover to the headlight body 2, essentially known.

When in use, that is to say having effected the coupling of the headlight body 2 and the cover 3, the pins 6 are inserted into the relative seats 7 and the guide component 13 is inserted into the guide 20, coupled to the sliding surface 22; according to the invention, the guide component 13 has a predetermined interference fit with the slide surface 22 according to the predetermined translation direction allowed by the removal/insertion of the pins 5 from the relevant seats 7.

In that way, the cover 3 is linked to the headlight body 2, in that the separation of the cover 3 from the headlight body 2 may only occur by a relative sliding movement of the said cover 3 in relation to the headlight body 2 according to the direction of translation defined by the direction of the removal of the pins 6 from the seats 7: however the said relative sliding movement is prevented by the interference fit between guide component 13 and the sliding surface 22.

The relative rotation of the cover 3 in relation to the headlight body 2 allowed by the pins 6 makes the guide component 13 slide on the sliding surface 22 to selectively assume a first operative position 13a (figure 3) when the cover 3 assumes in relation to the headlight body 2 a position of maximum opening 13b (figure 3) and a second operative position 13b (figure 4) when the cover 3 assumes, still in relation to the headlight body 2, a closure position (illustrated by a full line in figure 4); in the first operative position 13a, the guide component 13 comes to bear with its end edge 17 against the shoulder 24 of the headlight body 2, in such a manner as to restrain the relative rotation of the cover 3 in relation to the headlight body 2.

The guide component 13 slides on the sliding surface 22, while maintaining in all of the intermediate positions it may assume between the operational positions 13a, 13b, an interference fit according to the translation direction along which the removal of the pins 6 from the relative seats 7 may occur: in particular, the said interference fit if it also has a third removal position of the cover 3 from the headlight body 2 (shown by the broken line in figures 3 and 4); effectively, to separate the cover 3 from the headlight body 2, the cover is moved in relation to the headlight body 2, to an intermediate position between the positions of maximum opening and closing position, to a reduced interference between the guide component 13 and the sliding surface 22 according to the direction of translation along which a relative slide should occur between the cover 3 and the headlight body 2: the relative sliding of said cover 3 in relation to the headlight body 2 along that direction (allowing removal of the pins 6 from the relative seats 7) occurs on forcing the guide component 13, which flexible deforms against the end edge 26 of the guide 20 (of greater rigidity than the guide component 13), and the cover 3 is thus separable from the headlight body 2.

It is clear that the reverser operation may be carried out to couple once more the cover 3 to the headlight body 2; the relative sliding of the cover 3 in relation to the headlight body 2 according to the direction of translation along which insertion (or removal) of the pins in relation to the seats 7 is effected will determine by slightly forcing the guide component 13, the flexible deforming of the said guide component 13, as required to overcome the predetermined interference fit with the relative sliding surface 22 and will enter into the guide 20: at that point, the cover 3 and the headlight body 2 are mutually connected and articulated one with the other by means of the pins 6 and the relative seats 7.

The particular profile of the chamfer 18 of the guide component 13 and the flexible deforming of the guide component 13 will allow, after having brought the cover 3 in a position of maximum opening in relation to the headlight body 2 and thereby the end edge 17 of the guide component 13 bears against the shoulder 24, an additional rotation of the cover 3, to facilitate further if necessary, the access to the inside of the headlight body 2.

Finally it is clear that the coupling system described above will allow numerous modifications and variations without thereby coming out of the protective field defined by the claims.

## Claims

1. - Coupling system (1) for a headlight body (2), in particular for a motor vehicle headlight, with a closure cover (3) for the said headlight body (2), comprising hinge-type articulation means (27), to allow relative rotation of the said cover (3) in relation to the said headlight body (2) about a predetermined rotation axis (28), and stop means (13,24) to limit the said relative rotation to a maximum predetermined amplitude,
wherein the said hinge type articulation means (27) are also designed to allow reversible coupling of the said headlight body (2) and of the said cover (3), the said cover (3) being separable from the said headlight body (2) to slide in relation to the said headlight body (2) according to a predetermined translation direction; the said stop means comprising in turn at least a flexibly deforming guide component (13) integral with the said cover (3), **characterised by** the said guide component (13) being coupled with the said headlight body (2) with a predetermined interference fit according to the said translation direction and being flexibly deformable to allow the sliding of the said cover (3) in relation to the said headlight body (2) along the said translation direction.

2. - Coupling system according to claim 1, **characterised in that** the said flexibly deforming guide component (13) is coupled in a sliding manner with a relative sliding surface (22) of the said essentially rigid headlight body (2), the said guide component (13) being carried by the said relative rotation of the said cover (3) in relation to the headlight body (2) to slide on the said sliding surface (22) to selectively assume a first (13a) and a second (13b) operational position, respectively when the said cover (3) assumes relatively to the said headlight body (2) a position of maximum opening and closing; in the said first operational position (13a), the said guide component (13) bearing with its end edge (17) against a shoulder (24) of the said headlight body (2), to limit the said rotation relative to the said maximum predetermined amplitude.

3. - Coupling system according to claim 2, **characterised in that** the said guide component (13) slides over the said sliding surface (22), while maintaining in all intermediate positions between the said operational positions (13a,13b), an interference fit according to the said translation direction, to prevent the removal of the said cover (3) from the said headlight body (2).

4. - Coupling system according to claim 3, **characterised in that** the said cover (3) can be coupled with and separated from the said headlight body (2) when it assumes in relation to the said headlight body (2) an intermediate position between the said relative maximum opening position and the said closure position, by way of relative sliding of the said cover (3) relatively to the said headlight body (2) according to the said translation direction; the said guide component (13) flexibly deforming in response to the action of a predetermined entity exerted according to the said translation direction to allow the relative sliding of the said cover (3) in relation to the said cover (3) in relation to the said headlight body (2).

5. - Coupling system according to claim 3 or 4, **characterised in that** the said hinge-type articulation means (27) comprise at least a single pin (6) located to rotate ion a relative seat (7) and defining the said rotation axis (28) relating to the said cover (3) in relation to the said headlight body (2) can be coupled with and separated from the said headlight body (2); the said single pin at least (6) and the said relative seat being respectively carried integrally with the said cover (3) and the said headlight body (2), or vice-versa.

6. - Coupling system according to claim 5, **characterised in that** the said hinge-type articulation means (27) comprise a pair of pins (6) fitted integral with the said cover (3) and inserted so as to rotate in respective seats (7) in the said headlight body (2); the said pins (6) allowing insertion into the said respective seats (7) and removable therefrom to slide according to the sliding direction, the said translation direction being essentially orthogonal to the said pins (6).

7. - Coupling system according to claim 6, **characterised in that** the said pins (6) are carried by respective support arms (8) extending in overhang from the said cover (3); the said seats (7) being recessed into respective extensions (10) of the said headlight body (2), in turn extending in overhang from the said headlight body (2) towards the said support arms (8) of the said cover (3).

8. - Coupling system according to claim 7, **characterised in that** the said seats (7) have respective apertures for the insertion of the said pins (6) according to the direction of translation; the said pins (6) being extracted from the said respective seats (7) by sliding according to the direction of translation when the said cover (3) and the said headlight body (2) are each relatively to each other in the said intermediate position.

9. - Coupling system according to claim 8, **characterised in that** the said guide component (13) extends in overhang from an end portion (9) of the said cover (3), between the said support arms (8) of the said pins (6), and presents a curved profile; the said sliding surface (22) being a curved surface of a guide (20) recessed into the said headlight body (2) and demarcated by two sides (21) essentially flat and parallel to each other; the said sliding surface (22) having a profile matching the profile of the guide component (13) and ending with an end edge (26) of greater rigidity than that of the said guide component (13).

10. - Coupling system according to one of claims 2 to 9, **characterised in that** the said end edge (17) of the said guide component (13) has a profile (18) designed to allow when the said end edge (17) bears against the said shoulder (24) of the said headlight body (2), an additional rotation of the said cover (3) in relation to the said headlight body (2) beyond that of the said predetermined amplitude.

11. - Coupling system according to any one of claims 2 to 10, **characterised in that** it also comprises reversing hooking means (34) of the said cover (3) to the said headlight body (2), designed to maintain the said cover (3) in the said closure position in relation to the said headlight body (2).

12. - Coupling system according to claim 11, **characterised in that** the said reversible hooking means (34) comprise an elastic strip (29), integral with the said cover (23) and allowing snap-coupling with a relative securing seat (31) integral with the said headlight body (2).

## Patentansprüche

1. Kopplungssystem (1) für einen Scheinwerferkörper (2), insbesondere für einen Kraftfahrzeugscheinwerfer, mit einer Verschlussabdeckung (3) für den Scheinwerferkörper (2), das Schwenkmittel (27) des Scharniertyps, um eine relative Drehung der Abdeckung (3) in Bezug auf den Scheinwerferkörper (2) um eine vorgegebene Drehachse (28) zu ermöglichen, und Anschlagmittel (13, 24), um die relative Drehung auf eine maximale vorgegebene Amplitude zu begrenzen, umfasst, wobei die Schwenkmittel (27) des Scharniertyps außerdem so entworfen sind, dass sie eine reversible Kopplung des Scheinwerferkörpers (2) und der Abdeckung (3) ermöglichen, wobei die Abdeckung (3) von dem Scheinwerferkörper (2) getrennt werden kann, um in Bezug auf den Scheinwerferkörper (2) längs einer vorgegebenen Translationsrichtung zu gleiten; wobei die Anschlagmittel ihrerseits wenigstens eine sich flexibel verformende Führungskomponente (13) aufweisen, die einteilig mit der Abdeckung (3) ausgebildet ist, **dadurch gekennzeichnet, dass** die Führungskomponente (13) mit dem Scheinwerferkörper (2) mit einer vorgegebenen Presspassung längs der Translationsrichtung gekoppelt ist und flexibel verformbar ist, um das Gleiten der Abdeckung (3) in Bezug auf den Scheinwerferkörper (2) längs der Translationsrichtung zu ermöglichen.

2. Kopplungssystem nach Anspruch 1, **dadurch gekennzeichnet, dass** die sich flexibel verformende Führungskomponente (13) gleitend mit einer entsprechenden Gleitoberfläche (22) des im Wesentlichen starren Scheinwerferkörpers (2) gekoppelt ist, wobei die Führungskomponente (13) durch die relative Drehung der Abdeckung (3) in Bezug auf den Scheinwerferkörper (2) transportiert wird, um auf der Gleitoberfläche (22) zu gleiten, um wahlweise eine erste Betriebsposition (13a) oder eine zweite Betriebsposition (13b) einzunehmen, wenn die Abdeckung (3) relativ zu dem Scheinwerferkörper (2) eine Position mit maximaler Öffnung bzw. mit maximaler Schließung einnimmt; wobei die Führungskomponente (13) in der ersten Betriebsposition (13a) mit ihrer Stirnkante (17) an einer Schulter (24) des Scheinwerferkörpers (2) anliegt, um die Drehung relativ zu der maximalen vorgegebenen Amplitude zu begrenzen.

3. Kopplungssystem nach Anspruch 2, **dadurch gekennzeichnet, dass** die Führungskomponente (13) über die Gleitoberfläche (22) gleitet, wobei in allen Zwischenpositionen zwischen den Betriebspositionen (13a, 13b) eine Presspassung längs der Translationsrichtung aufrechterhalten wird, um die Entfernung der Abdeckung (3) von dem Scheinwerferkörper (2) zu verhindern.

4. Kopplungssystem nach Anspruch 3, **dadurch gekennzeichnet, dass** die Abdeckung (3) mit dem Scheinwerferkörper (2) gekoppelt und von ihm getrennt werden kann, wenn sie in Bezug auf den Scheinwerferkörper (2) eine Zwischenposition zwischen der relativen maximalen Öffnungsposition und der Verschlussposition einnimmt, indem die Abdeckung (3) relativ zu dem Scheinwerferkörper (2) längs der Translationsrichtung gleitet; wobei sich die Führungskomponente (13) in Reaktion auf die Wirkung einer vorgegebenen Entität, die längs der Translationsrichtung ausgeübt wird, flexibel verformt, um das Gleiten der Abdeckung (3) in Bezug auf die Abdeckung (3) in Bezug auf den Scheinwerferkörper (2) zu ermöglichen.

5. Kopplungssystem nach Anspruch 3 oder 4, **dadurch gekennzeichnet, dass** die Schwenkmittel (27) des Scharniertyps wenigstens einen einzigen Stift (6) umfassen, der so angeordnet ist, dass er sich in einem entsprechenden Sitz (7) dreht, und die Drehachse (28) der Abdeckung (3) in Bezug auf den Scheinwerferkörper (2) definiert und mit dem Scheinwerferkörper (2) gekoppelt und von ihm getrennt werden kann, wobei der wenigstens einzige Stift (6) und der entsprechende Sitz einteilig durch die Abdeckung (3) bzw. durch den Scheinwerferkörper (2) oder umgekehrt getragen werden.

6. Kopplungssystem nach Anspruch 5, **dadurch gekennzeichnet, dass** die Schwenkmittel (7) des Scharniertyps ein Paar Stifte (6) umfassen, die einteilig mit der Abdeckung (3) ausgebildet und in diese eingesetzt sind, um sich in entsprechenden Sitzen (7) in dem Scheinwerferkörper (2) zu drehen; wobei die Stifte (6) in die entsprechenden Sitze (7) eingesetzt und hieraus entnommen werden können, um längs der Gleitrichtung zu gleiten, wobei die Translationsrichtung zu den Stiften (6) im Wesentlichen senkrecht ist.

7. Kopplungssystem nach Anspruch 6, **dadurch gekennzeichnet, dass** die Stifte (6) durch entsprechende Unterstützungsarme (8), die sich von der Abdeckung (3) überstehend erstrecken, getragen werden; wobei die Sitze (7) in entsprechenden Verlängerungen (10) des Scheinwerferkörpers (2) ausgespart sind, die sich ihrerseits von dem Scheinwerferkörper (2) überstehend zu den Unterstützungsarmen (8) der Abdeckung (3) erstrecken.

8. Kopplungssystem nach Anspruch 7, **dadurch gekennzeichnet, dass** die Sitze (7) entsprechende Öffnungen zum Einsetzen der Stifte (6) längs der Translationsrichtung besitzen, wobei die Stifte (6) aus den entsprechenden Sitzen (7) durch Gleiten längs der Translationsrichtung herausgezogen werden, wenn die Abdeckung (3) und der Scheinwerferkörper (2) relativ zueinander jeweils in der Zwischenposition sind.

9. Kopplungssystem nach Anspruch 8, **dadurch gekennzeichnet, dass** sich die Führungskomponente (13) überstehend von einem Endabschnitt (9) der Abdeckung (3) zwischen den Unterstützungsarmen (8) der Stifte (6) erstreckt und ein gekrümmtes Profil aufweist; wobei die Gleitoberfläche (22) eine gekrümmte Oberfläche einer Führung (20) ist, die in dem Scheinwerferkörper (2) ausgespart und durch zwei Seiten (21), die im Wesentlichen eben und zueinander parallel sind, begrenzt ist; wobei die Gleitoberfläche (22) ein Profil besitzt, das mit dem Profil der Führungskomponente (13) übereinstimmt und in einer Stirnkante (26) endet, die eine größere Starrheit als jene der Führungskomponente (13) hat.

10. Kopplungssystem nach einem der Ansprüche 2 bis 9, **dadurch gekennzeichnet, dass** die Stirnkante (17) der Führungskomponente (13) ein Profil (18) besitzt, das so entworfen ist, dass es dann, wenn die Stirnkante (17) an der Schulter (24) des Scheinwerferkörpers (2) anliegt, eine zusätzliche Drehung der Abdeckung (3) in Bezug auf den Scheinwerferkörper (2) über die vorgegebene Amplitude hinaus zulässt.

11. Kopplungssystem nach einem der Ansprüche 2 bis 10, **dadurch gekennzeichnet, dass** es außerdem reversible Einhakmittel (34) der Abdeckung (3) an dem Scheinwerferkörper (2) umfasst, die so entworfen sind, dass sie die Abdeckung (3) in der Verschlussposition in Bezug auf den Scheinwerferkörper (2) halten.

12. Kopplungssystem nach Anspruch 11, **dadurch gekennzeichnet, dass** die reversiblen Einhakmittel (34) einen elastischen Streifen (29) umfassen, der einteilig mit der Abdeckung (23) ausgebildet ist und eine Eintrastkopplung mit dem entsprechenden Sicherungssitz (31), der einteilig mit dem Scheinwerferkörper (2) ausgebildet ist, ermöglichen.

## Revendications

1. Système de couplage (1) destiné à un corps de phare (2), en particulier à un phare de véhicule à moteur, avec un couvercle de fermeture (3) pour ledit corps de phare (2), comprenant un moyen d'articulation de type charnière (27) destiné à permettre la rotation relative dudit couvercle (3) par rapport audit corps de phare (2) autour d'un axe de rotation prédéterminé (28), et un moyen butoir (13, 24) destiné à limiter ladite rotation relative à une amplitude maximum prédéterminée, dans lequel ledit moyen d'articulation de type charnière (27) est également conçu pour permettre un couplage réversible dudit corps de phare (2) et dudit couvercle (3), ledit couvercle (3) pouvant être séparé dudit corps de phare (2) pour coulisser par rapport audit corps de phare (2) selon une direction de translation prédéterminée ; ledit moyen butoir comprenant à son tour au moins un composant de guidage se déformant de manière flexible (13) monté d'une seule pièce avec ledit couvercle (3), **caractérisé par le fait que** ledit composant de guidage (13) est couplé avec ledit corps de phare (2) par un ajustement avec serrage prédéterminé selon ladite direction de translation et peut être déformé de manière flexible pour permettre le coulissement dudit couvercle (3) par rapport audit corps de phare (2) le long de ladite direction de translation.

2. Système de couplage selon la revendication 1, **caractérisé en ce que** ledit composant de guidage se déformant de manière flexible (13) est couplé d'une manière coulissante avec une surface coulissante relative (22) dudit corps de phare (2) sensiblement rigide, ledit composant de guidage (13) étant porté par ladite rotation relative dudit couvercle (3) par rapport au corps de phare (2) pour coulisser sur ladite surface coulissante (22) pour prendre de manière sélective une première (13a) et une seconde (13b) positions opérationnelles, respectivement lorsque ledit couvercle (3) prend par rapport audit corps de phare (2) une position d'ouverture et de fermeture maximum ; dans ladite première position opérationnelle (13a), ledit composant de guidage (13) reposant au niveau de son bord d'extrémité (17) contre un épaulement (24) dudit corps de phare (2) pour limiter ladite rotation par rapport à ladite amplitude maximum prédéterminée.

3. Système de couplage selon la revendication 2, **caractérisé en ce que** ledit composant de guidage (13) coulisse sur ladite surface coulissante (22), tout en maintenant dans toutes les positions intermédiaires entre lesdites positions opérationnelles (13a, 13b) un ajustement avec serrage selon ladite direction de translation, pour empêcher l'enlèvement dudit couvercle (3) dudit corps de phare (2).

4. Système de couplage selon la revendication 3, **caractérisé en ce que** ledit couvercle (3) peut être couplé avec ledit corps de phare (2) et séparé de celui-ci lorsqu'il prend, par rapport audit corps de phare (2), une position intermédiaire entre ladite position d'ouverture et ladite position de fermeture maximum relatives, au moyen du coulissement relatif dudit couvercle (3) par rapport audit corps de phare (2) selon ladite direction de translation; ledit composant de guidage (13) se déformant de manière flexible en réponse à l'action d'une entité prédéterminée exercée selon ladite direction de translation pour permettre le coulissement relatif dudit couvercle (3) par rapport audit couvercle (3) par rapport audit corps de phare (2).

5. Système de couplage selon la revendication 3 ou 4, **caractérisé en ce que** ledit moyen d'articulation de type charnière (27) comprend au moins une aiguille unique (6) située de manière à tourner sur un siège (7) relatif et définissant ledit axe de rotation (28) par rapport audit couvercle (3) par rapport audit corps de phare (2) et pouvant être couplé avec ledit corps de phare (2) et être séparé de celui-ci ; ladite aiguille unique au moins (6) et ledit siège relatif étant respectivement portés d'une seule pièce avec ledit couvercle (3) et ledit corps de phare (2), ou vice-versa.

6. Système de couplage selon la revendication 5, **caractérisé en ce que** ledit moyen d'articulation de type charnière (27) comprend une paire d'aiguilles (6) montées d'une seule pièce sur ledit couvercle (3) et insérées de manière à tourner dans les sièges respectifs (7) dans ledit corps de phare (2) ; lesdites aiguilles (6) permettant l'insertion dans lesdits sièges respectifs (7) et pouvant être enlevées de ceux-ci pour coulisser selon la direction de translation, ladite direction de translation étant sensiblement orthogonale auxdites aiguilles (6).

7. Système de couplage selon la revendication 6, **caractérisé en ce que** lesdites aiguilles (6) sont portées par des bras de support respectifs (8) s'étendant en surplomb à partir dudit couvercle (3) ; lesdits sièges (7) étant en retrait dans des extensions respectives (10) dudit corps de phare (2), à leur tour s'étendant en surplomb à partir dudit corps de phare (2) vers lesdits bras de support (8) dudit couvercle (3).

8. Système de couplage selon la revendication 7, **caractérisé en ce que** lesdits sièges (7) ont des ouvertures respectives pour l'insertion desdites aiguilles (6) selon la direction de translation ; lesdites aiguilles (6) étant extraites desdits sièges respectifs (7) par coulissement selon la direction de translation lorsque ledit couvercle (3) et ledit corps de phare (2) sont chacun par rapport à l'autre dans ladite position intermédiaire.

9. Système de couplage selon la revendication 8, **caractérisé en ce que** ledit composant de guidage (13) s'étend en surplomb à partir d'une partie d'extrémité (9) dudit couvercle (3), entre lesdits bras de support (8) desdites aiguilles (6), et présente un profil incurvé ; ladite surface coulissante (22) étant une surface incurvée d'un guide (20) en retrait dans ledit corps de phare (2) et démarqué par deux côtés (21) sensiblement plats et parallèles l'un à l'autre ; ladite surface coulissante (22) ayant un profil correspondant au profil du composant de guidage (13) et se terminant par un bord d'extrémité (26) ayant une rigidité supérieure à celle dudit composant de guidage (13).

10. Système de couplage selon l'une des revendications 2 à 9, **caractérisé en ce que** ledit bord d'extrémité (17) dudit composant de guidage (13) a un profil (18) conçu pour permettre, lorsque ledit bord d'extrémité (17) est en appui contre ledit épaulement (24) dudit corps de phare (2), une rotation supplémentaire dudit couvercle (3) par rapport audit corps de phare (2) au-delà de celle de ladite amplitude prédéterminée.

11. Système de couplage selon l'une quelconque des revendications 2 à 10, **caractérisé en ce qu'**il comprend en outre des moyens d'accrochage réversibles (34) dudit couvercle (3) audit corps de phare (2), conçus pour maintenir ledit couvercle (3) dans ladite position de fermeture par rapport audit corps de phare (2).

12. Système de couplage selon la revendication 11, **caractérisé en ce que** lesdits moyens d'accrochage réversibles (34) comprennent une bande élastique (29) constituée d'une seule pièce avec ledit couvercle (23) et permettant le couplage par pression avec un siège de fixation relatif (31) constitué d'une seule pièce avec ledit corps de phare (2).
